Europäisches Patentamt

European Patent Office

Office européen des brevets

(19)

(11) Publication number: **0 130 984**
**B1** ·

(12) # EUROPEAN PATENT SPECIFICATION

(45) Date of publication of patent specification: **24.08.88**

(51) Int. Cl.⁴: **B 62 M 9/08**

(21) Application number: **83901505.4**

(22) Date of filing: **24.03.83**

(86) International application number:
**PCT/US83/00410**

(87) International publication number:
**WO 84/02690 19.07.84 Gazette 84/17**

(54) INCREMENTALLY VARIABLE TRANSMISSION.

(30) Priority: **10.01.83 US 456736**

(43) Date of publication of application:
**16.01.85 Bulletin 85/03**

(45) Publication of the grant of the patent:
**24.08.88 Bulletin 88/34**

(84) Designated Contracting States:
**AT BE CH DE FR GB LI LU NL SE**

(56) References cited:
**EP-A-0 008 851**
**EP-A-0 021 839**
**WO-A-80/02129**
**GB-A- 453 712**
**GB-A-2 062 142**
**US-A-3 867 851**
**US-A-3 899 932**
**US-A-3 956 944**
**US-A-4 030 373**
**US-A-4 342 559**

(73) Proprietor: **Shiber, Samuel**
**529 Killarney Circle P.O. Box 371**
**Mundelein, IL 60060 (US)**

(73) Proprietor: **Husted, Royce H.**
**711 Lakeside Dr.**
**Wheaton, IL 60187 (US)**

(72) Inventor: .**HUSTED, Royce H.**
**711 Lakeside Dr.**
**Wheaton, IL 60187 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

The invention relates to an incrementally variable transmission having an improved variable sprocket useful particularly in bicycles.

Presently, ten speed bicycle transmissions consist of a chain wrapped around a front double sprocket and a rear cluster containing five sprockets, a front derailleur and a rear derailleur for derailing the chain from one sprocket to another in response to a rider moving two control levers which are connected to the derailleurs. The derailleurs are made of a large number of delicate parts which need frequent maintenance and are easily damaged. The derailleur system is also hard to operate, it generates a continuous noise and inefficiencies in certain gears due to misalignment of the chain and it calls for a frequent visual inspection by the rider, to visually verify the gear ratio he is in, diverting his attention from the road. For these reasons several attempts have been made in the past to introduce different systems, some of which are based on variable sprockets. Examples of such efforts can be found in U.S. Patent Nos. 3,850,044 and 3,850,045. Some of the reasons for such systems being commercially unsuccessful, on a large scale, were their complexity, high cost, added weight and maintenance problems. Another example is found in British Patent No. 453,712. In the arrangement of document GB-A-453,712 (on which the pre-characterizing part of claim 1 is based) gear planets are mounted on two flanges that are rotatable with respect to one another. One flange has a radial slot thus confining the motion of the planets to radial parts and the other flange has a series of spiral wavy slots, relative rotational movement between the two flanges causes the planets to move radially, confined by the radial slots in the one disc and guided to particular positions radially by the spiral wavy slots in the other disc. Set gear ratios exist when the planets rest in depressions in the spiral wavy cam slot. A disadvantage with this type of system is that the positions of the depressions must be extremely accurately machined to ensure that the distance around the chain wheel is correct to allow accurately aligned pick up and release of the chain. Inaccuracies can lead to the chain not being picked up properly and thus suddenly becoming slack when the rider attempts to change gear. In document US-A-3,867,851 sprocket segment planets have limited pivotal movements to attempt to achieve positive tooth engagement with the chain. In US-A-3,850,045 the planets are fully rotatable to this end.

The present invention, however, seeks to solve this problem by a combination of the positioning of the depressions in the spiral wavy cams and a particular tooth profile. In particular the present invention provides a variable ratio transmission sprocket comprising; a drive flange, two sprocket-segment planets and at least two idler-planets, said planets being connected to said drive flange and adapted to radially slide on said drive flange, an indexing flange mounted opposite of said drive flange and having a plurality of spiral-wavy-cams for radially expanding and contracting corresponding cam followers on said planets in order to increase and decrease, respectively, the effective diameter of said sprocket, said sprocket-segment-planets having teeth adapted to engage with a chain which is adapted to wrap approximately one half of said sprocket, said chain being made of links and having a pitch equal to the length of said chain divided by the number of said links, characterized in that the relationship between said spiral-wavy-cams and the location of said planets when the followers are seated in the depressions and both sprocket-segment-planets are engaged with said chain is such that the length of chain that is trapped between said sprocket-segments-planets is substantially without slack but is also not taut and to sychronize said chain and said sprocket-segment-planet at the points of their engagement and disengagement, and in that at least one of said teeth is shaped with a relatively steep leading edge profile to engage positively said chain and remain engaged while the load applied to the chain is carried by said teeth. Optional features of the invention are set out below in the claims that follow claim 1.

FIG. 1 shows a side view of a bicycle equipped with an incrementally variable transmission;

FIG. 2 shows a portion of the bicycle and the variable sprocket as viewed in the direction pointed by an arrow 2-2 marked on FIG. 1, with the sprocket itself sectioned along line 2'-2' marked on FIG. 3;

FIG. 3 shows a partially broken front view of the variable sprocket;

FIG. 4 shows a rear view of the variable sprocket with three of the six locking means removed;

FIGS. 5, 6 and 7 show front, side and rear views, respectively, of a sprocket-segment-planet;

FIGS. 8, 9 and 10 show front, side and rear views, respectively, of an idler-planet;

FIG. 11 shows a cross section of an area of the variable sprocket which contains the sprocket-segment-planet, as viewed along section-line 11-11 marked on FIG. 3; and

FIG. 12 shows an enlarged area of the sprocket-segment-planet which is marked on FIG. 5 by an eliptical phantom line.

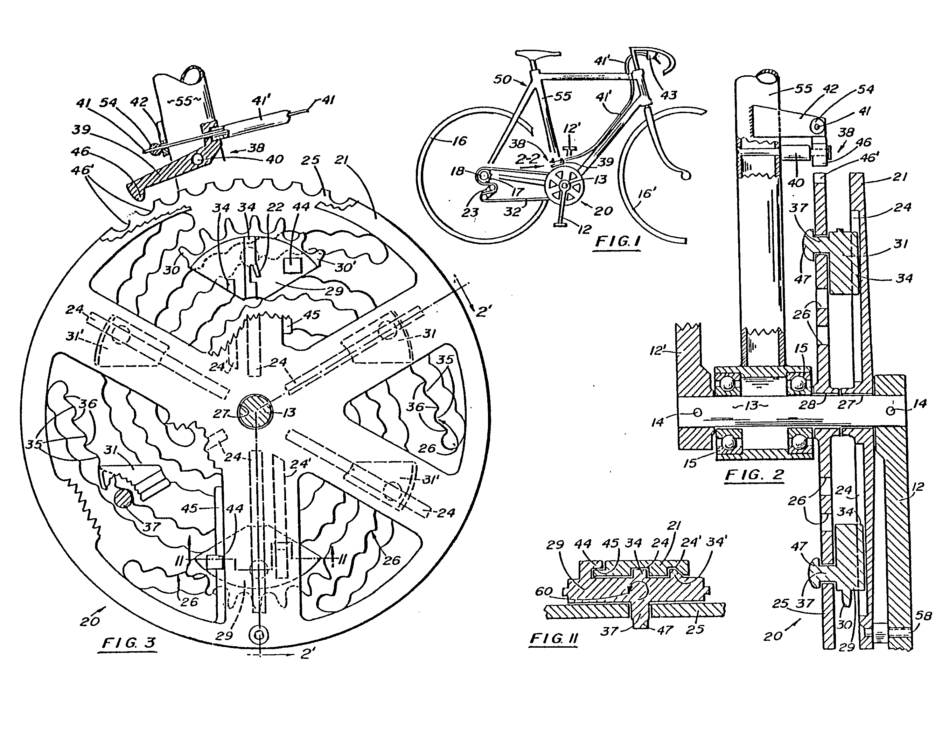

The attached FIGURES show a bicycle (please note FIG. 1) having a frame 50, with a seat post member 55, pedals 12 and 12' which are affixed to an axle 13 by pins 14 (FIG. 2). The axle 13 is rotatably mounted in the frame by means of ball-bearings 15. Rear and front wheels 16 and 16' are also rotatably mounted to the frame 50 in a conventional manner. The bicycle is equipped with an incrementally variable transmission comprising a variable sprocket 20 which is coupled by a conventional roller chain 32 to a sprocket 17 that is, in turn, conventionally coupled to the rear wheel 16 via a one-way-clutch 18.

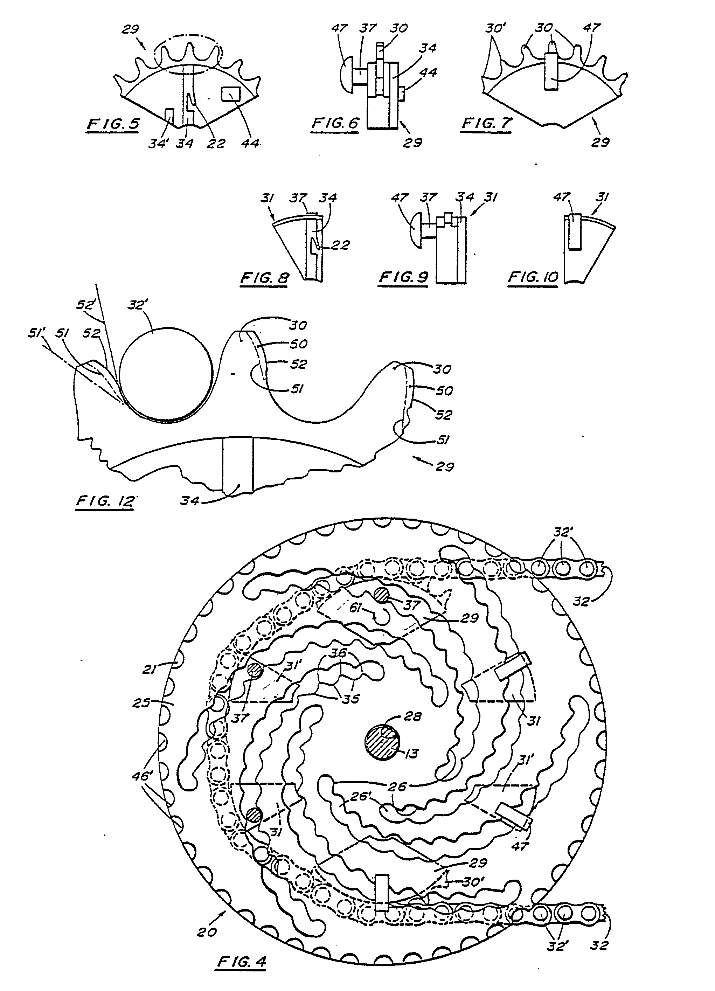

The sprocket 20 (FIGS. 2, 3, 4 and 11) is mounted on the axle 13, and has: a drive flange 21 having a bore 27 which is fitted on the axle 13 and is affixed to the pedal 12 by a bolt 58, an indexing flange 25 having a round bore 28 which is rotatably fitted on the axle 13 opposite of the drive flange 21 and has a plurality of spiral-wavy-cams 26, two sprocket-segment-planets 29 (identical elements, or identical parts thereof, will be identified by the same numbers) and four idler-planets 31 and 31' (planet 31' is a mirror image of planet 31) sandwiched between the flanges 21 and 25, coupling means, in the form of keys 34 and 34' and respective radial keyways 24 and 24', for tangentially connecting said planets to said drive flange 21, cam-followers 37 attached to each of the planets 29, 31 and 31', for engaging with and following their respective spiral-wavy-cam 26, the spiral-wavy-cam comprising a series of alternating depressions 35 and hills 36 (FIGS. 3 and 4). Whenever the cam-follower 37 moves from one depression 35 to the next, it moves over the hill 36 at which point it is further away from the axle 13 (and the center of the sprocket 20) than when it is seated in either of the depressions 35 between which it is moving. As the planet slides along the spiral-wavy-cam 26, from one depression to the next, the effective diameter of the sprocket 20 decreases and increases, respectively, in response to a relative rotation between the flanges 21 and 25. Locking means 47 formed at the end of the cam-followers 37 slides along and engages an outer surface of the indexing flange 25. Under working loads which may cause a slight deformation of the indexing flange 25, the locking means 47 engages with the outer surface of the indexing flange 25 and prevents the separation of the planets from it (the shape of the locking means 47 allows their insertion through slots 26' for attaching them to the indexing flange 25). The sprocket-segment-planets 29 are equipped with additional locking means, in the form of a hook 44 which slides along and engages with an outer surface 45 of the drive flange 21, to resist together with the key 34 the tendency of the sprocket-segment-planet 29 to rotate (in a direction shown by circular arrow 61, FIG. 4) and twist (in a direction of circular arrow 60, FIG. 11) due to the tangential force that the chain's load creates on teeth 30.

The planets 29, 31 and 31' each have a small cantilever spring 22 (FIGS. 3, 5 and 8) which is formed as a part of the key 34, to create a preload between the key 34 and the keyway 24 to prevent the planets from developing an annoying rattle while they are not engaged with the chain 32.

The chain 32 (FIG. 4) is wrapped around approximately one half of the sprocket 20, and engages with the teeth 30 that are located on a rounded section of the sprocket-segment-planets 29. Part of the leading teeth 30' is removed to prevent interference with the chain 32 when the transmission is in high gear ratios. The chain 32 is made of links and has a pitch length equalling the length of the chain 32 divided by the number of links contained in the chain. It should be understood that while a conventional bicycle roller chain is preferred, the term chain covers other chains and toothed belts which could also be used for putting together the system.

As the bicycle is pedaled, load is developed in the chain 32 which in turn creates tangential and radial loads on the planets. The tangential loads are taken by the sprocket-segment-planets 29 and are transmitted to the keys 34 and 34' which are formed on the side of each of the sprocket-segment-planets 29, and which engage with and slide in the radial keyway 24 and 24', respectively, transmitting these loads to the drive flange 21. Radial loads which develop in the planets around which the chain 32 is wrapped, are transmitted to the spiral-wavy-cams 26, through cam-followers 37 formed on the sides of the planets 29, 31 and 31'. The radial load secures and properly positions the planets in the depressions 35.

Since only a small fraction of the periphery of the sprocket 20 carries chain engaging teeth 30, it is preferred to design the shape of some of these teeth 30 so that they positively engage with rollers 32' of the chain, to prevent the chain from disengaging by escaping over the teeth, especially under dynamic loads which are associated with bicycling. To achieve the positive engagement of the chain's roller 32' the design of a standard tooth shape of a commercial roller-chain sprocket (which was established by the American Standards Association and approved by the industry) is modified (FIG. 12) by adding a section 50 which is defined between the phantom line 51 and line 52. The line 51 marks the commercial tooth shape and line 52 is the modified tooth shape. A phantom line 51' and a line 52' mark imaginary inclined planes on which the roller 32' has to climb, in order to disengage from the tooth 30, in the case of the commercial and the modified tooth shapes, respectively. The inclined plane 52' is so steep that it prevents the load in the chain from pulling the roller 32' over the tooth 30, whereas experience has shown that in the case of an unmodified commercial tooth shape the roller 32' may occasionally climb over the tooth.

However, since in the case of the present invention the chain's load secures the engagement between the chain 32 and the teeth 30, it is preferred to remove the load from the sprocket-segment-planet 29 which is about to disengage from the chain 32, and since the engagement of the one sprocket-segment-planet 29 (which takes place at the top of the sprocket 20) occurs slightly before the disengagement of the other sprocket-segment-planet 29 (which takes place at the bottom of the sprocket 20), it is possible, by radially displacing the depressions 35 a fraction of a millimeter towards the axle 13 (relative to their theoretical position which corresponds to zero slack in the chain section which warps half of the sprocket 20 and which is engaged with both sprocket-segment planets 29 and is trapped between them. This chain section will be referred to as trapped chain) to maintain the trapped chain substantially without slack but at the same time to assure that the trapped chain is not taut which in turn assures that the chain's load has been transferred to the newly engaged sprocket-segment-planet 29 from the previously engaged sprocket-segment-planet 29 freeing it to disengage from the chain 32. The small radial displacement of the depressions 35 which is required to assure the smooth disengagement does not interfere with the operation of the sprocket 20 and the length of the trapped chain remains substantially an integral (natural) number of pitches whenever the sprocket 20 is operational, in any of the gear ratios, and therefore, the synchronization (that is, the proper meshing) between the chain 32 and the teeth 30 is maintained. Excessive or insufficient slack would prevent proper synchronization of the chain 32 with the sprocket-segment-planet 29 at the point of their engagement, causing the teeth 30 to hit the roller 32'. Further, insufficient slack would not only prevent the engaging sprocket-segment-planet 29 from assuming the chain's load but instead it would generate an additional load in the trapped chain and between the chain 32 and both of the sprocket-segment-planets 29, and may make the chain's disengagement from the sprocket 20 difficult. The actual characteristics of the disengagement may vary with the prevailing coefficient of friction between the roller 32' and the tooth 30, however, since it is necessary to assure engagement with low coefficient of friction, when a high coefficient of friction prevails, the disengagement becomes erratic unless the disengaging sprocket-segment-planet 29 is relieved of the chain's load.

A brake assembly 38 (FIGS. 2 and 3) has an arm 39 which is pivoted on a stud 40 which is affixed to the frame member 55. The arm 39 has a rounded pawl 46 which is adapted to engage and brake dimples 46' which are formed in the periphery of the indexing flange 25 in response to being pushed by an outer jacket 41' of a cable 41 which is secured to a bracket 42 by means of a crimped ferrule 54. At their other end the cable 41 and its jacket 41' are connected to a conventional hand lever assembly 43 which the rider can depress in order to move the cable 41 relative to the jacket 41', and thereby engage the brake 38. When the indexing flange 25 is braked and the drive flange 21 is rotated through the pedals 12 and 12', foward and backwards, intersections of the keyways 24 and the spiral-wavy-cams 26 expand and contract together with the planets, respectively, causing the transmission to change to a high gear ratio and a low ratio, respectively.

The spiral-wavy-cams 26 are arranged so that the sprocket-segment-planets 29 remain at a substantially symmetrical position relative to the axle 13, so that an imaginary line drawn through the sprocket-segment-planets 29 will pass through the axle 13. Thereby, at least one sprocket-segment-planet 29 is engaged with the chain 32 at all times to maintain the power transmission between the sprockets 17 and 20, but most of the time only one sprocket-segment-planet 29 is engaged with the chain 32, allowing the transmission to change to a higher gear ratio (if the sprocket-segment-planets 29 were clustered together, at a certain point during the rotation of the sprocket 20 none would be engaged with the chain 32 which wraps approximately one half of the sprocket 20). Thus, as the sprocket 20 rotates, the chain 32 is engaged, alternately, with one sprocket-segment-planet 29 or with the other, with a short transitional overlap during which both sprocket-segment-planets 29 are engaged. In order to make the transition between the sprocket-segment-planets 29 as smooth as possible, it is preferred to make it while a minimum amount of power is transmitted through the chain 32. Since the transition occurs when the sprocket-segment-planets 29 are at their top/bottom position, and since a rider usually pedals lighter when the pedals are at their top/bottom position, arranging the pedals 12 and the sprocket-segment-planets 29 along the same imaginary line will synchronize the two to coincide.

Each of the planets 29, 31 and 31', is engaged with its own respective keyways and the respective spiral-wavy-cam 26 which controls the radial location of the respective planet. Therefore, it is a designer's option to maintain all the planets at equal distances from the axle 13 or to move one opposing pair, planets 29 for example, further away from the axle 13 so that an imaginary ellipse can be drawn through planets 29, 31 and 31'. When such a configuration of planets is orientated relative to the pedals, in accordance with a certain bio-engineering theory, the utilization of the rider's capabilities should be improved. Further, one of the planets 29 can be moved slightly further than the other in order to provide a slightly higher ratio when the rider's stronger foot, usually his right foot, pedals down. The planets 29 will still be maintained in substantially symmetrical positions relative to the axle 13. However, such refinements are probably worthwhile only for people who ride bikes competitively.

A tensioner mechanism 23 takes up chain's slack which occurs when the planets are contracted.

To achieve economical manufacturing and light weight it is preferred to mold the various parts from highly reinforced plastics. For example, the planets can be molded from reinforced nylon and the flanges 21 and 25 from reinforced polyester. Alternatively, die cast aluminum alloy is suitable, especially for manufacturing the flanges, for improved rigidity of the sprocket 20.

The bicycle is ridden and pedaled like a conventional bicycle, with the improvement that lowering the transmission ratio (which is the effective diameter of the sprocket 20 divided by the effective diameter of the rear sprocket 17) is done by back pedaling while energizing the brake 38, thereby slowing the indexing flange 25 relative to the drive flange 21 and causing the intersections of the keyways 24 and the spiral-wavy-cam 26 to radially move towards the axle 13, contracting the planets 29, 31 and 31' and decreasing the effective diameter of the sprocket 20. The one-way-clutch 18 permits back pedaling even when the bicycle is stationary. Shifting to a higher ratio is achieved by braking and slowing the indexing flange 25 relative to the drive flange 21 while pedaling forward, expanding the planets and thereby increasing the effective diameter of the sprocket 20. As the planets are expanded or contracted, the cams 37 are moved from one depression 35 to the next and the length of chain which is trapped between the two sprocket-segment-planets 29 increases or decreases, respectively, by an integral (natural) number of pitches so that the length of the trapped chain remains substantially an integral number of pitches and, therefore, the sprocket-segment-planet 29 remains synchronized with the chain 32 at the point of engagement. When the planets shift over the hills 36, from one depression 35 to the next, the sprocket 20 momentarily goes out of synchronization with the chain 32, but, as soon as the cams 37 are reseated in the depressions 35 the synchronization of the chain 32 with the sprocket-segment-planet 29 is re-established, assuring their proper mesh. If the cams 37 are not properly seated, the chain's load pushes them into the depressions 35. It is easier to shift the sprocket 20, especially to a higher ratio, when the chain's load is minimal, that is when the only tension in the chain 32 is created by the chain tensioner 23. Shifting the transmission to a lower ratio can be done while the bicycle is stationary, since the one-way-clutch 18 allows back pedaling even when the rear wheel 16 is not rotating, and this allows a rider who is stopped while being in a high ratio (in a traffic light, for example) to shift to a lower ratio to ease acceleration. Shifting to a higher ratio takes place while pedaling forward and when only one sprocket-segment-planet 29 is engaged with the chain, since during the transition period when both sprocket-segment-planets 29 are engaged the trapped chain momentarily prevents the planets from expanding.

**Claims**

1. A variable ratio transmission sprocket comprising: a drive flange (21), two sprocket-segment-planets (29) and at least two idler-planets (31), said planets being connected to said drive flange and adapted to radially slide on said drive flange, an indexing flange (25) mounted opposite of said drive flange and having a plurality of spiral-wavy-cams (26) for radially expanding and contracting corresponding cam followers (37) on said planets (29, 31) in order to increase and decrease, respectively, the effective diameter of said sprocket, said sprocket-segment-planets (29) having teeth (30) adapted to engage with a chain (32) which is adapted to wrap approximately one half of said sprocket, said chain being made of links and having a pitch equal to the length of said chain divided by the number of said links, characterized in that the relationship between said spiral-wavy-cams (26) and the location of said planets (29, 31) when the followers (37) are seated in the depressions (35) and both sprocket-segment-planets are engaged with said chain (32) is such that the length of chain (32) that is trapped between said sprocket-segments-planet (29) is substantially without slack but is also not taut and to sychronize said chain and said sprocket-segment-planet at the points of their engagement and disengagement, and in that at least one of said teeth (30) is shaped with a relatively steep leading edge profile (52) to engage positively said chain and remain engaged while the load applied to the chain is carried by said teeth.

2. A variable sprocket according to claim 1, wherein the location of said planets (29, 31) is that when said sprocket-segment planet (29) engages with the chain (32) it takes over the chain's load from the previously engaged sprocket-segment-planet (29) allowing the previously engaged sprocket-segment-planet (29) to become disengaged from the chain (32).

3. A variable sprocket according to claim 1, wherein the leading teeth are partially removed to avoid improper engagement of these teeth with the chain (32) when the planets (29, 31) are in an expanded position.

4. A variable sprocket according to any preceding claim wherein said drive flange has radial keyways (24) and said planets having keys (34) adapted to slide in said keyways (24) and transmit tangential forces, an axle (13) connected to said drive flange, an indexing flange (25) being rotatably mounted on said axle (13).

5. A variable sprocket according to any preceding claim wherein said planets (29, 31) are sandwiched between said drive flange (21) and said indexing flange.

6. A variable sprocket according to any preceding claim, wherein said spiral-wavy-cams (26) guide said sprocket-segment-planets (29) so that their position remains substantially symmetrical relative to said axle as they slide along said spiral-wavy-cams, so that at least one of said sprocket-segment-planets (29) is engaged with said chain at all times and only one of said sprocket-segment-planets (29) is engaged with said chain (32) part of the time.

7. A variable sprocket according to any preceding claim, wherein said planet (29) includes locking means (47) to prevent it from separating from said spiral-wavy-cam (26) under load.

8. A variable sprocket according to any preceding claim, wherein said sprocket-segment-planet (29) has locking means (24, 34, 44, 45, 24', 34') to prevent it from rotating and twisting relative to said drive flange (21) and also preventing the sprocket-segment-planet (29) from separating from said drive flange (21) under load.

9. A variable sprocket according to any preceding claim, including spring means (22) for preloading said planets against at least one of said flanges (21, 25) is provided between said planets (29) and said flange (21, 25), for preventing the planet (29) from rattling.

**Patentansprüche**

1. Kettenrad mit veränderbarem Übersetzungsverhältnis, mit einem Antriebsflansch (21), zwei Kettenradsegment-Planetengliedern (29) und mindestens zwei Stütz-Planetengliedern (81), wobei die genannten Planetenglieder mit dem Antriebsflansch verbunden und in diesem radialverschiebbar gelagert sind, ferner mit einem dem Antriebsflansch gegenüberliegende montierten Rastflansch (25), der mit einer Mehrzahl von gewellten Spiralführungen (26) ausgebildet ist, die dazu dienen, zum Vergrößern und Verkleinern des wirksamen Durchmessers des Kettenrades suf den Planetengliedern (29, 31) vorgesehene Kurvenabtaster (37) radial auswärts bzw. einwärts zu bewegen, wobei die Kettenradsegment-Planetenglieder (29) Zähne (30) besitzen, die zum Eingriff in eine Kette (32) geeignet sind, die geeignet ist, ungefähr eine Hälfte des Kettenrades zu umschlingen und die aus Kettengliedern besteht, wobei die Teilung gleich der durch die Anzahl der Kettenglieder geteilte Länge der Kette ist, dadurch gekennzeichnet, daß bei in die Vertiefung (35) der gewellten Spiralführungen (26) eingreifenden Kurvenabtastern (37) und bei einem Eingriff beider Kettenradsegment-Planetenräder mit der Kette (32) die Beziehung zwischen den gewellten Spiralführungen (26) und den Orten der Planetenräder (29, 31) derart ist, daß die Kette in ihrer zwischen den Kettenradsegment-Planetengliedern (29) spielfrei, aber nicht straff gespannt ist, daß ein Gleichlauf der Kette und der Kettenradsegment-Planetenglieder an den Stellen erzielt wird, an denen ihr gegenseitiger Eingriff beginnt bzw. endet, und daß mindestens einer der Zähne (30) mit einem relativ steilen Vorderkantenprofil (52) ausgebildet ist, so daß er formschlüssig in die Kette eingreift und mit ihr im Eingriff bleibt, wenn die auf die Kette einwirkende Last von den Zähnen übernommen wird.

2. Verstellbares Kettenrad nach Anspruch 1, dadurch gekennzeichnet, daß die Planetenglieder (29, 31) so angeordnet sind, daß ein Kettenradsegment-Planetenglied (29) bei seinem Einrüoken in die Kette (32) von dem vorher eingerückten Kettenradsegment-Planetenglied (29) die von der Kette ausgeübte Last übernimmt, so daß das vorher eingerückte Kettenradsegment-Planetenglied (29) sich aus der Kette (32) ausrücken kann.

3. Verstellbares Kettenrad nach Anspruch 1, dadurch gekennzeichnet, daß die vorlaufenden Zähne teilweise beseitigt sind, damit bei gespreizten Planetengliedern (29, 31) ein unrichtiger Eingriff dieser Zähne in die Kette (32) vermieden wird.

4. Verstellbares Kettenrad nach einem der vorhergehenden Ansprüche, dadurch gekennzeichnet, daß der Antriebsflansch radiale Keilnuten (24) besitzt und die Planetenglieder mit Keilen (34) versehen ist, die in den Keilnuten (24) gleitend gelagert und zur Übertragung von tangentialen Kräften geeignet sind, und daß mit dem Antriebsflansch eine Achse (13) verbunden ist, auf der der Rastflansch (25) drehbar gelagert ist.

5. Verstellbares Kettenrad nach einem der vorhergehenden Ansprüche, dadurch gekennzeichnet, daß die Planetenglieder (29, 31) zwischen dem Antriebsflansch (21) und dem Rastflansch angeordnet sind.

6. Verstellbares Kettenrad nach einem der vorhergehenden Ansprüche, dadurch gekennzeichnet, daß die gewellten Spiralführungen (26) die Kettenradsegment-Planetenglieder (29) derart führen, daß diese bei ihrem Gleiten längs der gewellten Spiralführungen in einer in Bezug zu der Achse symmetrische Anordnung im wesentlichen beibehalten, so daß mindestens eines der Kettenradsegment-Planetenglieder (29) ständig in die Kette eingreift und nur eines der Kettenradsegment-Planetenglieder (29) nur zeitweise in die Kette (32) eingreift.

7. Verstellbares Kettenrad nach einem der vorhergehenden Ansprüche, dadurch gekennzeichnet, daß das Planetenglied (29) mit einer Halteeinrichtung (47) versehen ist, die ein Abrücken von der gewellten Spiralführung (26) unter Last verhindert.

8. Verstellbares Kettenrad nach einem der vorhergehenden Ansprüche, dadurch gekennzeichnet, daß das Kettenradsegment-Planetenglied (29) mit einer Halteeinrichtung (24, 34, 44, 45, 24', 34') versehen ist, die eine Drehung und Verdrehung des Kettenradsegment-Planetengliedes gegenüber dem Antriebsflansch (21) und ein Abrücken des Kettenradsegment Planetengliedes (29) von dem Antriebsflansch (21) unter Last verhindert.

9. Verstellbares Kettenrad nach einem der vorhergehenden Ansprüche, mit zwischen den Plantengliedern (29) und mindestens einem der Flansche (21, 25) angeordneten Federmitteln (22) zum Vorbelasten der Planetenglieder gegen mindestens einen der Flansche (21, 25), um ein Rattern des Planetengliedes (29) zu verhindern.

**Revendications**

1. Un pignon de transmission à rapport variable comprenant: un flasque d'entraînement (21), deux satellites (29) en forme de segments de pignon et au moins deux satellites fous (31), lesdits satellites étant reliés audit flasque d'entraînement et étant adaptés pour glisser radialement sur ledit flasque d'entraînement, un flasque d'indexage (25) monté à l'opposé dudit flasque d'entraînement et comportant une pluralité de cames ondulées en spirale (26) pour assurer une expansion et une contraction radiale de galets de cames correspondants (37) sur lesdits satellites (29, 31) de façon à augmenter et réduire, respectivement, le diamètre effectif dudit pignon, lesdits satellites (29) en forme de segments de pignon comportant des dents (30) adaptées pour entrer en prise avec une chaîne (32) qui est adaptée pour s'enrouler approximativement sur une moitié dudit pignon, ladite chaîne étant formée de maillons et ayant un pas égal à la longueur de ladite chaîne divisée par le nombre desdits maillons, caractérisé en ce que la relation entre lesdites cames ondulées en spirale (26) et la position desdits satellites (29, 31) quand les galets (37) sont logés dans les creux (35) et quand les deux satellites en forme de segments de pignon sont en prise avec ladite chaîne (32) est telle que la longueur de chaîne (32) qui est maintenue entre lesdits satellites (29) en forme de segments de pignon est sensiblement sans mou mais n'est en outre pas tendue et assure la synchronisation de ladite chaîne avec lesdits satellites en forme de segments de pignon en leurs points d'accouplement et de désaccouplement, et en ce qu'au moins une desdites dents (30) est pourvue d'un profil de bord d'attaque (52) à pente relativement forte pour entrer en prise efficacement avec ladite chaîne et rester en prise pendant que la charge appliquée à la chaîne est supportée par lesdites dents.

2. Un pignon variable selon la revendication 1, dans lequel la position desdits satellites (29, 31) est telle que, lorsque ledit satellite (29) en forme de segment de pignon entre en prise avec la chaîne (32), il récupère la charge de chaîne provenant du satellite (29) en forme de segment de pignon qui était précédemment en prise, en permettant à ce satellite (29) en forme de segment de pignon précédemment en prise d'être désaccouplé de la chaîne (32).

3. Un pignon variable selon la revendication 1, dans lequel les premières dents sont partiellement enlevées afin d'éviter une entrée en prise incorrecte desdites dents avec la chaîne (32) quand les satellites (29, 31) se trouvent en position d'expansion.

4. Un pignon variable selon une quelconque des revendications précédentes, dans lequel ledit flasque d'entraînement comporte des rainures radiales de clavetage (24) et lesdits satellites comportent des clavettes (34) adaptées pour coulisser dans lesdites rainures de clavetage (24) et pour transmettre des forces tangentielles, un arbre (13) étant relié audit flasque d'entraînement, un flasque d'indexage (25) étant monté à rotation sur ledit arbre (13).

5. Un pignon variable selon une quelconque des revendications précédentes, dans lequel lesdits satellites (29, 32) sont interposés entre ledit flasque d'entraînement (21) et ledit flasque d'indexage.

6. Un pignon variable selon une quelconque des revendications précédentes, dans lequel lesdites cames ondulées en spirale (26) assurent le guidage desdits satellites (29) en forme de segments de pignon de telle sorte que leurs positions restent sensiblement symétrique par rapport audit arbre quand ils coulissent le long desdites cames ondulées en spirale, afin qu'au moins un desdits satellites (29) en forme de segments de pignon soit en prise avec ladite chaîne à tous moments et que seulement un desdits satellites (29) en forme de segments de pignon soit en prise avec ladite chaîne (32) pendant une partie du temps.

7. Un pignon variable selon une quelconque des revendications précédentes, dans lequel ledit satellite (29) comprend des moyens de blocage (47) pour l'empêcher de se séparer de ladite came ondulée en spirale (26) sous l'action d'une charge   8. Un pignon variable selon une quelconque des revendications précédentes, dans lequel ledit satellite (29) en forme de segment de pignon comporte des moyens de blocage (24, 34, 44, 45, 24', 34') pour l'empêcher de tourner et de se tordre par rapport audit flasque d'entraînement (21) et également pour empêcher le satellite (29) en forme de segment de pignon de se séparer dudit flasque d'entraînement (21) sous l'action d'une charge.

9. Un pignon variable selon une quelconque des revendications précédentes, comprenant un moyen élastique (22) servant à précharger lesdits satellites contre au moins un desdits flasques (21, 25) et disposé entre lesdits satellites (29) et ledit flasque (21, 25) pour empêcher le satellite (29) de cliqueter.

FIG. 1

FIG. 2

FIG. 11

FIG. 3

0 130 984

FIG. 5

FIG. 6

FIG. 7

FIG. 8

FIG. 9

FIG. 10

FIG. 12

FIG. 4

2